# EUROPÄISCHE PATENTANMELDUNG

(11) **EP 4 844 357 A1**
(43) Veröffentlichungstag der Anmeldung: **25.11.2026**
(21) Anmeldenummer: 26180383.7
(22) Anmeldetag: 21.05.2026
(51) Int. Cl.: G01L 5/22, G01L 5/162, G01L 5/165

(54) **SENSOREINRICHTUNG, SYSTEM UND VERFAHREN ZUR ERFASSUNG WENIGSTENS EINER KRAFT UND IHRER RICHTUNG**

(30) Priorität: 22.05.2025 DE 102025119955
(71) Anmelder: Fraunhofer-Gesellschaft zur Förderung der angewandten Forschung e.V., 80686 München (DE); Technische Universität Chemnitz Körperschaft des öffentlichen Rechts, 09111 Chemnitz (DE)
(72) Erfinder: WUNDERLE, Bernhard, 09126 Chemnitz (DE); ZSCHENDERLEIN, Uwe, 09111 Chemnitz (DE); BLAUDECK, Thomas, 09126 Chemnitz (DE); KARNAUSHENKO, Daniil, 09111 Chemnitz (DE); SCHULZ, Stefan E., 09126 Chemnitz (DE); SCHMIDT, Oliver G., 09111 Chemnitz (DE)
(74) Vertreter: Pfenning, Meinig & Partner mbB

(57) **Zusammenfassung**

Die Erfindung bezieht sich auf eine Sensoreinrichtung, ein System und ein Verfahren zur Erfassung von Betrag und Richtung wenigstens einer Kraft (100), wobei die Sensoreinrichtung mehrere Kraftsensoren (1, 2, 3, 4) umfasst, die jeweils zur Messung einer Kraft in einer einzigen Richtung (5, 6, 7, 8) eingerichtet, voneinander beabstandet und von wenigstens einer Krafteinleitungsschicht (9, 9a, 9b, 9c) bedeckt sowie mit einer gemeinsamen Verarbeitungseinrichtung verbunden sind. Die Verarbeitungseinrichtung ist in einigen Implementierungen als selbstlernende Verarbeitungseinrichtung ausgestaltet und kann geeignet trainiert werden.

## Beschreibung

Die Erfindung liegt auf dem Gebiet der Mechanik, Sensorik und der elektronischen Messtechnik und kann mit besonderem Vorteil in der Robotik und in anderen Gebieten der Automatisierung, in der Medizintechnik, bei der Herstellung von Exoskeletten, jedoch auch in weiteren Gebieten der Technik eingesetzt werden.

Bei der Wechselwirkung von Greifern und Werkzeugen oder Gegenständen im weitesten Sinne, die mit anderen Gegenständen in Berührung kommen, ist es in vielen Fällen nützlich, die zwischen den Gegenständen wirkenden Kräfte zu kennen. Dabei sind punktuelle Kraftmessungen in vielen Fällen nicht zielführend oder führen nicht zu sinnvollen Ergebnissen.

Aus diesem Grund werden verschiedene Modelle einer sogenannten "smart skin" diskutiert, die auch komplexere Wechselwirkungen erfassen kann und dabei genauere Informationen liefert.

Beispielsweise ist aus der deutschen Patentschrift DE3715693 C1 ein System bekannt, bei dem ein taktiler Sensor zur ortsaufgelösten Kraftmessung mit einem Netzwerk von faseroptischen Interferometern aufgebaut ist. Die interferometrischen Sensoren sind dort über einem Trägerkörper in einer Elastomerschicht angeordnet.

Der vorliegenden Erfindung liegt vor dem Hintergrund des Standes der Technik die Aufgabe zugrunde, eine Sensoreinrichtung sowie ein System und ein Verfahren zu schaffen, die in einfacher Weise eine möglichst umfassende Erfassung von Informationen über eine einwirkende Kraft ermöglichen.

Die Lösung der Aufgabe gelingt mit den Merkmalen der unabhängigen Patentansprüche. Die abhängigen Patentansprüche stellen besondere Ausgestaltungen der Erfindung vor.

Somit bezieht sich die Erfindung auf eine Sensoreinrichtung zur Erfassung wenigstens einer Kraft und ihrer Richtung, umfassend:
mehrere Kraftsensoren, die jeweils zur Messung einer Kraft in einer einzigen Richtung eingerichtet, voneinander beabstandet und von wenigstens einer Krafteinleitungsschicht mit wenigstens einer Elastomerschicht bedeckt sowie mit einer gemeinsamen Verarbeitungseinrichtung verbunden sind, wobei die Krafteinleitungsschicht eine erhebungsfreie Oberfläche und insbesondere eine konstante Dicke aufweist.

Die Elastomerschicht kann dabei die Krafteinleitungsschicht vollständig bilden. Sie ist vorzugsweise homogen und ohne Einlagerungen von starren Elementen, das heißt von Elementen, die aus einem starreren Material bestehen als die Elastomerschicht. Die Elastomerschicht kann dabei von Bruchteilen eines Millimeters bis mehrere Millimeter dick sein. Sie kann beispielsweise als Schaum ausgebildet sein und Gasblasen oder Gelblasen enthalten, die ihre mechanischen Eigenschaften beeinflussen. Sie kann auch aus mehreren übereinander angeordneten, jeweils für sich homogenen Elastomerschichten verschiedener Steifigkeit bestehen. Darüber kann die Sensitivität der Sensoreinrichtung eingestellt werden. Die Elastomerschicht kann auf diese Weise auch in einfacher Weise auf komplex geformte, mehrfach gekrümmte Oberflächen aufgebracht werden. Sie ist auch stark dehnbar und kann deshalb auch Bewegungen einfach folgen, ohne die Kraftsensoren zu beschädigen oder diesen gegenüber verschoben zu werden. Die Elastomerschicht kann auch zunächst unabhängig von den Kraftsensoren hergestellt und dann über einen mit den Kraftsensoren versehenen Gegenstand, wie beispielsweise einen künstlichen Finger gezogen werden.

Die Krafteinleitungsschicht kann eine glatte, erhebungsfreie Oberfläche aufweisen. Sie kann in einigen Fällen eine über die Ausdehnung der Sensoreinrichtung konstante Dicke aufweisen. Dies gilt auch für Teilschichten der Elastomerschicht, falls diese aus mehreren Elastomerschichten mit verschiedener Steifigkeit aufgebaut ist. In dem Fall, dass Kraftsensoren in die Krafteinleitungsschicht eingebettet sind, ist in diesem Zusammenhang die Dicke der Krafteinleitungsschicht oder Elastomerschicht definiert als die Dicke der Krafteinleitungsschicht/Elastomerschicht, gemessen von ihrer Oberfläche bis zu einer die Oberseiten der Kraftsensoren verbindenden oder einhüllenden Fläche.

Die Eigenschaft, dass die Oberfläche der Krafteinleitungsschicht erhebungsfrei ist, kann beispielsweise in einer möglichen Ausführungsform so verstanden werden, dass beispielsweise keine Erhebungen vorgesehen sind, die in den Erstreckungsrichtungen der Oberfläche eine Ausdehnung haben, die kleiner ist als ein zweidimensionales Sensorfeld mit 9 Kraftsensoren. Das schließt Krümmungen der Sensoranordnung in einem größeren Maßstab nicht aus, um diese beispielsweise an Werkzeuge, auf deren Oberfläche sie angeordnet wird, anzupassen. Da die Oberfläche der Krafteinleitungsschicht oder der Elastomerschicht somit keine Höhenstruktur aufweist, ist sie unabhängig von der Teilung/dem pitch der Sensormatrix und muss weder an diese in der Herstellung angepasst werden noch relativ zu den Sensoren bei der Herstellung positioniert werden.

Die Kraftsensoren können dabei eine Sensormatrix bilden, die Krafteinleitungsschicht kann insgesamt elastisch sein und die auf die Sensoreinrichtung wirkende Kraft räumlich verteilen (spreizen), ohne dass notwendigerweise jede Teilschicht der Krafteinleitungsschicht elastisch sein muss.

Die Verarbeitungseinrichtung kann in der Form einer Auswerteelektronik gestaltet sein.

Die Kraftsensoren können bezüglich der typischerweise auftretenden Fehler leicht kalibriert werden, beispielsweise dadurch, dass die Oberfläche mit der Krafteinleitungsschicht, beispielsweise der Elastomerschicht und den darunter befindlichen Kraftsensoren auf einem bestimmten gleichverteilten Druck ausgesetzt wird und dabei die von den Kraftsensoren erfassten Messwerte registriert und ausgewertet werden. Damit kann geprüft werden, ob die Kraftsensoren intakt sind und an welchem Arbeitspunkt sie die Kraft messen. Ein gleichmäßiger Druck kann beispielsweise aufgebracht werden, indem ein mit den Kraftsensoren und der Krafteinleitungsschicht belegter Gegenstand oder eine Fläche einem hydrostatischen Druck in einer Flüssigkeit ausgesetzt wird oder mit einem unter Druck stehenden, sehr leicht verformbaren, ballonartigen Gegenstand in Berührung gebracht wird. Wenn der Druck während der Kalibrierung zusätzlich veränderbar ist, kann auch die Sensitivität der Sensoren geeicht werden und ihre Linearität kann überprüft werden, so dass diese Eigenschaften bei nachfolgenden Messungen berücksichtigt werden können.

Während der Stand der Technik überwiegend sehr komplexe Einzel-Kraft-sensoren erfordert, kann die erfindungsgemäße Sensoreinrichtung mit sehr einfachen, uniaxiale Kräfte erfassenden Kraftsensoren aufgebaut werden. Diese Kraftsensoren können so aufgebaut sein, dass sie nur entlang einer einzigen Achse (ihrer Kraftmessachse/Messachse) eine Kraft erfassen oder erfassen können (uniaxiale Sensoren). Damit ergibt sich eine robuste Lösung die auch bezüglich der Auswertung der erfassten Messwerte durch die eindeutige Richtungszuordnung der Einzelmessungen wenig fehleranfällig ist. Die Ermittlung der wirkenden Kraft erfolgt durch eine Auswertung der erfassten Messwerte der Einzel-Kraftsensoren im Zusammenhang mit den Eigenschaften der Krafteinleitungsschicht. Die Krafteinleitungsschicht ist derart gestaltet, dass sie eine Verteilung oder Spreizung der einwirkenden Kraft auf die Einzel-Kraftsensoren in Abhängigkeit von der Richtung der einwirkenden Kraft bewirkt. Die einzelnen Kraftsensoren können jeweils die Kraftkomponente messen, die parallel zu ihrer Kraftmessachse wirkt. Durch dieses Zusammenwirken ermöglicht die geeignete Auswahl der Krafteinleitungsschicht mit der Anordnung und Ausrichtung der Einzel- Kraftsensoren und deren Messachsen eine sinnvolle, robuste und zuverlässige Auswertung. Es werden besonders dann gute Auswertungsergebnisse erzielt, wenn die mechanische Ankopplung der Krafteinleitungsschicht an die Einzel- Kraftsensoren gut definiert und möglichst für alle Einzel-Kraftsensoren in gleicher Weise realisiert ist. Es ergibt sich beispielsweise bei einer senkrecht auf die Krafteinleitungsschicht wirkenden Kraft, dass sowohl ein zentral an der Stelle der Krafteinwirkung angeordneter Kraftsensor eine Kraft erfasst, als auch in symmetrischer Weise und mit wachsendem Abstand zu dem zentral angeordneten Kraftsensor in abnehmender Intensität die rund um ihn herum angeordneten Kraftsensoren. Wirkt dieselbe Kraft schräg auf den an der Stelle der Krafteinwirkung angeordneten Kraftsensor, so werden die um ihn herum angeordneten Kraftsensoren ein asymmetrisches Muster, beispielsweise mit einer elliptischen Form, erfassen, wobei die lange Achse der Ellipse der Richtung der Kraftkomponente parallel zur Oberfläche der Krafteinleitungsschicht entspricht.

Durch die Verwendung einer Krafteinleitungsschicht, insbesondere mit teilweise dämpfenden Eigenschaften und einer Mehrzahl von Sensoren, deren Messwerte koordiniert ausgewertet werden, wird eine deutlich geringere Störanfälligkeit und eine höhere Ausfallsicherheit erreicht als bei der Verwendung von einzelnen präziseren und komplexeren Kraftsensoren, die beispielsweise bereits jeweils für sich die Messung eines Kraftbetrages und einer Kraftrichtung zulassen. Bei dem erfindungsgemäßen System können Ausfälle und mangelnde Kalibrierung von Einzel-Kraftsensoren gut kompensiert werden. Gleichzeitig ist die, insbesondere wenigstens teilweise elastomerbasierte, Krafteinleitungsschicht ein Schutz gegen Stöße für die polymerbasierte Sensormatrix. Die Krafteinleitungsschicht kann auch vollständig als Elastomerschicht ausgebildet sein oder beispielsweise durch zwei oder mehr Elastomerschichten mit verschiedenen Steifigkeiten gebildet sein. Durch die Einfachheit der Sensoren ist das Konzept nicht nur thermo-mechanisch zuverlässig, sondern auch unempfindlich gegenüber Magnetfeldern, Strahlung und Feuchte was auch einen Einsatz in rauer Umgebung erlaubt. Die Kraftsensoren können einfach und kostengünstig gestaltet sein, beispielsweise als Polymersensoren und in vielen Fällen reicht bei der Erfassung der Kraft eine Bit-Tiefe von 4 Bit oder 8 Bit aus.

Eine Ausgestaltung der Sensoreinrichtung kann vorsehen, dass die Kraftsensoren auf einer ebenen, ein- oder mehrdimensional gekrümmten oder als Freiform gestalteten Fläche verteilt nebeneinander angeordnet sind.

Bei der Beschreibung der Erfindung werden die Begriffe "Kraftsensoren", Einzel-Kraftsensoren" und "einzelne Kraftsensoren" synonym verwendet.

Durch die beschriebene Anordnung der einzelnen Kraftsensoren können Bedingungen für die Sensoreinrichtung geschaffen werden, die für eine gegebene Messaufgabe optimiert sind. Insbesondere können in der Robotik bestimmte Sensoreinrichtungen in Form von frei gestaltbaren Körpern oder Körperhüllen geschaffen werden, die beispielsweise nach bionischen Grundsätzen einer menschlichen Hand oder einem Finger nachgebildet sind. Zudem können Messaufgaben in sonst für eine lokale Kraftmessung unzugänglichen Umgebungen, z. B. konkaven Freiformgeometrien im Inneren hohler Bauteile, realisiert werden. Die Kraftsensoren können beispielsweise auf einer gemeinsamen Platte oder auf einer flexiblen Matte angeordnet und befestigt sein. Eine Matte, auf der die Kraftsensoren befestigt sind, kann beispielsweise auch in bestimmtem Umfang dehnbar und zu diesem Zweck aus einem Elastomer hergestellt sein. Die Matte kann grundsätzlich auch aus den Einzel- Kraftsensoren und ihren, insbesondere elektrischen, Verbindungen gebildet sein.

Eine weitere Ausgestaltung der Sensoreinrichtung kann vorsehen, dass die Kraftsensoren in die Krafteinleitungsschicht eingebettet oder unter dieser auf einer starren Freiformoberfläche angeordnet sind.

Die Kraftsensoren können dann beispielsweise mit einem Elastomer vergossen und in einigen Fällen auch vollständig von einem Elastomer umgeben sein.

Um eine besonders gute mechanische Ankopplung der Krafteinleitungsschicht an die Kraftsensoren zu erreichen, kann die Krafteinleitungsschicht beispielsweise auf die Kraftsensoren aufgeklebt, an diese angepresst oder mit diesen vergossen sein. Die Kraftsensoren können auf einer starren Freiformfläche integriert sein, darüber könnte dann eine Krafteinleitungsschicht, insbesondere eine Elastomer-Krafteinleitungsschicht angeordnet sein. In diesem Fall ist die Bewegung der Kraftsensoren durch die Krafteinwirkung bei der Messung minimiert und eine mechanische Ermüdung beweglicher Elemente der Sensoren und/oder der Zuleitungen kann minimiert werden. Vor Allem sind die Sensoren so gegen mechanische Stoßbelastung geschützt.

Die Kraftsensoren können aber auch auf eine flexible Platte oder Matte aufgebracht sein oder in diese integriert sein. Die Krafteinleitungsschicht kann auch ihrerseits die Matte bilden, die zur Positionierung und mechanischen Verbindung der einzelnen Kraftsensoren dient. Ein weiterer Träger, eine Platte oder eine Matte, die die Kraftsensoren tragen kann in einigen Fällen dann überflüssig sein. Die Kraftsensoren können auch nur durch Stege miteinander verbunden sein und somit selbst eine Matte/einen Träger bilden. Die Stege können beispielsweise auch der elektrischen Kontaktierung oder der elektrischen Verbindung der Kraftsensoren untereinander dienen.

Durch eine mögliche flexible und elastische Gestaltung der Sensoren selbst sowie ihres Trägers und der Krafteinleitungsschicht kann die Sensoreinrichtung sehr widerstandsfähig gegen Erschütterungen, Stöße und Vibrationen gemacht werden.

Es kann weiter vorgesehen sein, dass die Krafteinleitungsschicht als homogene Schicht ausgebildet oder aus mehreren verschiedenen und übereinander angeordneten Teilschichten gebildet ist, wobei die verschiedenen Teilschichten wenigstens teilweise unterschiedliche Eigenschaften, insbesondere unterschiedliche mechanische Eigenschaften, aufweisen. In Abhängigkeit von der Messaufgabe kann so die Spreizung angepasst oder erhöht werden. Die oberste Teilschicht kann auch Haftungseigenschaften, das heißt beispielsweise einen hohen Haftreibungskoeffizienten oder sogar eine gewisse Klebwirkung aufweisen, was die Greifwirkung verbessert. Die elastomerbasierte Krafteinleitungsschicht erlaubt überdies eine einfache Reinigung der Oberfläche.

Die Krafteinleitungsschicht kann als homogene Schicht aus einem Elastomer bestehen und beispielsweise gegossen sein oder sie kann aus mehreren Teilschichten gebildet sein. Die oberste Schicht kann beispielsweise auch sehr viel dünner ausgestaltet sein als die darunterliegende Schicht, beispielsweise mit einer Schichtdicke, die weniger als 20 %, insbesondere weniger als 10 % der Dicke der darunterliegenden Schicht oder der gesamten Krafteinleitungsschicht ausmacht. Zudem kann die oberste Schicht beispielsweise feuchtigkeitsdurchlässig sein oder durchlässiger für Feuchtigkeit als die darunterliegenden Schichten. Dies ermöglicht es, in die oberste Schicht oder unmittelbar unter der obersten Schicht Feuchtigkeitssensoren anzuordnen, die zusätzlich zu der Kraftmessung eine Ermittlung der Feuchtigkeit im Bereich der Sensoreinrichtung ermöglichen. Gleichzeitig erlaubt dieses Konzept eine Co-Integration von z.B. optischer Sensorik, Näherungssensoren, oder magnetischen Sensoren im Sinne einer "augmented reality". Die gemessene Feuchtigkeit kann auch bei der Auswertung der Kraftmessung berücksichtigt werden, da sie in manchen Fällen durch Feuchteschwellung der Krafteinleitungsschicht die Kraftmessung beeinflusst.

Auch Temperatursensoren und/oder B-Feldsensoren, zum Beispiel in der Form von Hall-Sonden, können in die Sensoreinrichtung, beispielsweise in der Krafteinleitungsschicht oder zwischen den Kraftsensoren, vorgesehen sein. Die Temperatur kann beispielsweise die mechanischen Eigenschaften der Krafteinleitungsschicht und sowohl das B-Feld als auch die Temperatur können zudem auch die Messcharakteristik der Kraftsensoren beeinflussen. Durch die zusätzliche Erfassung der genannten Größen neben der Kraftmessung können Messfehler oder Änderungen der Charakteristik der Kraftsensoren korrigiert werden.

Die einzelnen Teilschichten, insbesondere die oberste Schicht, kann auch wenigstens teilweise lichtdurchlässig sein, so dass in oder unter der obersten Schicht in die Krafteinleitungsschicht lichtempfindliche Sensoren integriert werden können.

Letztlich können in die Krafteinleitungsschicht zusätzlich zu den Kraftsensoren auch generell Näherungssensoren integriert werden.

Weiter kann vorgesehen sein, dass die Krafteinleitungsschicht verschiedene Teilschichten aus Materialien mit unterschiedlichen Elastizitätskonstanten aufweist, wobei die Krafteinleitungsschicht insbesondere in wenigstens einer Teilschicht mechanisch anisotrope Eigenschaften aufweist, insbesondere zur Erhöhung der Spreizwirkung.

Beispielsweise kann die oberste Schicht, auf die eine zu erfassende Kraft unmittelbar wirkt, einen größeren oder kleineren Elastizitätsmodul aufweisen als die darunterliegende Schicht.

Es kann beispielsweise auch vorgesehen sein, dass wenigstens eine unterhalb der obersten Teilschicht liegende Teilschicht senkrecht zur Oberfläche der Schicht einen anderen Elastizitätsmodul aufweist als in den Haupterstreckungsrichtungen der Teilschicht, die senkrecht auf der Oberfläche der Teilschicht stehen. Zum Zweck der Erzeugung einer Anisotropie einer Teilschicht kann diese beispielsweise strukturiert sein, in dem sie in einer Ausführungsform in bestimmten Richtungen ausgerichtete Verstärkungsfasern aufweist. Beispielsweise kann die oberste Teilschicht zur Verringerung ihrer Dehnbarkeit Verstärkungsfasern aufweisen, die in den Richtungen parallel zu ihrer Oberfläche verlaufen. Alle Teilschichten können bei derartigen Aufbauten jeweils eine über die Sensorfläche gleichbleibende Schichtdicke aufweisen.

In einer oder mehreren Teilschichten können zudem auch Kavitäten angeordnet sein, die mit Flüssigkeiten, Gelen oder einem Gas gefüllt sind, um gewünschte mechanische Übertragungseigenschaften der Krafteinleitungsschicht zu erreichen.

Eine weitere Ausgestaltung der Sensoreinrichtung kann vorsehen, dass wenigstens eine Teilschicht der Krafteinleitungsschicht, insbesondere die gesamte Krafteinleitungsschicht, aus einem Elastomer besteht.

Als elastomere Werkstoffe kommen beispielsweise Gummi oder gummiartige Zusammensetzungen sowie Polyacrylate oder Silikone infrage. Es kann beispielsweise auch vorgesehen sein, dass wenigstens eine Teilschicht der Krafteinleitungsschicht aus einem Gel besteht oder ein Gel enthält. Eine solche, aus einem Gel bestehende Schicht kann insbesondere dann nützlich sein, wenn sie zwischen zwei festeren Teilschichten eingebettet ist. Mit einer solchen Gestaltung lässt sich eine Querverschiebbarkeit, wie sie beispielsweise bei der menschlichen Haut gegeben ist, realisieren.

Es kann auch vorgesehen sein, dass zumindest eine Gruppe der Kraftsensoren, insbesondere alle Kraftsensoren, als jeweils uniaxiale Sensoren und/oder als MEMS- Sensoren aus einem oder mehreren Polymerwerkstoffen und/oder als durch ein generatives Herstellungsverfahren aus einem oder mehreren Polymerwerkstoffen hergestellte Sensoren ausgebildet sind.

Die Kraftsensoren können als MEMS- Sensoren besonders kostengünstig hergestellt werden. Sie können in einem schichtweisen Herstellungsprozess entstehen, entweder durch ein an sich bekanntes 3D- Druckverfahren oder ein Laminierverfahren. Bei der schichtweisen Herstellung kann auch die Krafteinleitungsschicht wenigstens teilweise gleichzeitig mit den Kraftsensoren hergestellt werden. Es werden bei derartigen Herstellungsverfahren keine vorgefertigten Sensoren integriert, sondern die (polymerbasierten) Sensoren entstehen während des Integrationsprozesses, entweder
(1) durch Integration planar (Laminierung, Gießen, Lithographisch, CVD), und gegebenenfalls nachfolgendes konformes Aufbringen auf die Freiformoberfläche oder
(2) schon durch Integration auf der nicht planaren Freiformfläche, dann ist keine weitere Formgebung notwendig, beispielsweise bei einer Herstellung durch Spritzen, Gießen oder Drucken.

In einem CVD -Verfahren, wie unter (1) genannt, kann eine Sensorschicht aus einem Polymer, z.B. Parylene, mittels CVD (Chemical Vapor Deposition)-Verfahren hergestellt werden. Man erhält dadurch eine sehr dünne Sensormatrix mit einer Dicke von wenigen Mikrometern, beispielsweise weniger als 10 oder weniger als 5 Mikrometern, welche einfach auf einen starren Grundkörper geklebt werden kann, wobei der Grundkörper auch gekrümmt sein kann, da die Sensormatrix sehr flexibel ist. Darüber kann die Elastomerschicht aufgebracht werden. Die Sensoren selbst werden in durchgehenden, die CVD-Schicht vollständig durchsetzenden Öffnungen der CVD-Schicht entweder durch dort eingebrachte piezo-resistive Tinten oder in die Öffnungen eingebrachte, eine große Dielektrizitätskonstante aufweisende Materialien für kapazitive Sensoren gebildet. Die n x m Matrix wird dann mit einer ersten Gruppe von zueinander parallelen Leiterbahnen auf der Oberseite der CVD-Schicht und einer zweiten Gruppe von zueinander parallelen Leiterbahnen auf der Unterseite der CVD-Schicht die jeweils im elektrischen Kontakt mit den Sensoren vervollständigt. Die Leiterbahnen auf der Oberseite verlaufen dabei quer, insbesondere senkrecht zu den Leiterbahnen auf der Unterseite, derart, dass jeder Sensor von einer Leiterbahn auf der Oberseite und einer Leiterbahn auf der Unterseite der CVD-Schicht kontaktiert wird. Sobald die Sensormatrix auf eine starre Oberfläche aufgeklebt ist, wird sie nicht stark mechanisch belastet und ist daher hochzuverlässig.

Auch eine Herstellung der Kraftsensoren durch ein Gießverfahren ist möglich. Die Kraftsensoren können beispielsweise als kapazitive oder resistive/piezoresistive Sensoren ausgebildet sein. Dabei können Taxeldichten (Anzahl taktiler Druck-Sensoren pro Fläche) von 4 Sensoren /mm² oder größer vorteilhaft sein. Die Sensoren können dabei jeweils uniaxial aufgebaut sein, sodass jeder der einzelnen Kraftsensoren eine Kraft ausschließlich entlang einer einzigen Achse nachweisen kann. Damit können die Kraftsensoren einfach, kostengünstig und mit einer geringen Fehleranfälligkeit und Ausfallhäufigkeit gestaltet werden. Zusätzlich kann eine Unterscheidung zwischen Druck- und Zugkräften vorgesehen sein. Dies kann eine gemeinsame Auswertung der Einzelmesswerte erleichtern. Die Richtungen/Achsen, in denen die einzelnen Kraftsensoren jeweils eine Kraft erfassen, können in manchen Fällen alle parallel zueinander ausgerichtet sein. In vielen Fällen, insbesondere dann, wenn die Sensoreinrichtung eine gekrümmte Oberfläche aufweist und die Sensoren über eine gekrümmte Fläche oder Freiformfläche verteilt angeordnet sind, kann es auch vorgesehen sein, dass die Achsen, entlang denen die jeweiligen Kraftsensoren eine Kraft erfassen können, überwiegend oder in jedem Einzelfall senkrecht auf der Oberfläche der Krafteinleitungsschicht im Bereich des jeweiligen Kraftsensors stehen. Die Scherkomponenten (bei schräger Krafteinleitung) werden implizit erfasst über die kollektive Spreizwirkung des Elastomers als entsprechend typisch verteiltes Druck- oder Zugkraft-Muster in der Sensormatrix.

Durch die genannten Herstellungsprozesse sind die einzelnen Kraftsensoren jeweils für sich, jedoch auch die Anzahl von Kraftsensoren, die für eine Sensoreinrichtung verwendet wird, ohne größeren Aufwand skalierbar.

Es kann in einer möglichen Ausgestaltung auch vorgesehen sein, dass unter den Kraftsensoren einige in der Lage sind, Kräfte in wenigstens zwei Richtungen zu erfassen. Es kann auch eine gruppenweise verschiedene Ausrichtung der Achsen der Kraftsensoren vorgesehen sein, um besondere Sensitivitäten für bestimmte Kraftrichtungen zu erzielen.

Die Erfindung bezieht sich weiterhin auf ein System mit einer Sensoreinrichtung der oben beschriebenen Art sowie mit einer Verarbeitungseinrichtung, die als selbstlernende Verarbeitungseinrichtung ausgebildet ist und erfassten Kraftwerten einer Mehrzahl der Kraftsensoren insgesamt einen Kraftvektor in Betrag und Richtung und auch die Ortskoordinaten der Krafteinleitung zuordnet.

Unmittelbar an der Sensoreinrichtung kann beispielsweise eine relativ kleine elektronische Einheit zur Vorverarbeitung der Messdaten der Kraftsensoren vorgesehen sein (edge), durch die die Daten dann einer größeren, selbstlernenden Verarbeitungseirichtung zugeleitet werden.

Aus dem Stand der Technik sind überwiegend deterministische Auswertungsalgorithmen bekannt, die der Summe der einzeln erfassten Messwerte der Kraftsensoren eine Gesamtkraft zuordnen. Eine zuverlässige Auswertung sollte jedoch zusätzlich zu den einzelnen Messwerten noch weitere Bedingungen wie beispielsweise die mechanische Ankopplung der Krafteinleitungsschicht an die Kraftsensoren berücksichtigen. Derartige zusätzliche Einflussgrößen sind oft schwer zu bestimmen. Ein selbstlernendes System kann alle Einflussgrößen berücksichtigen, ohne dass diese im Einzelnen unabhängig voneinander bekannt sein müssen. Zudem wird durch ein selbstlernendes System, beispielsweise in Form eines neuronalen Netzes, ein äußerst schneller Auswertealgorithmus geschaffen. Eine Anpassung des Auswertealgorithmus an die Zahl und Anordnung der Kraftsensoren sowie an die im Einzelfall gestaltete Form der Oberfläche der Sensoreinrichtung/der Krafteinleitungsschicht erfolgt beim Training der selbstlernenden Einrichtung selbsttätig.

Weiter bezieht sich die Erfindung auf ein Verfahren zum Training einer selbstlernenden Verarbeitungseinrichtung, die mit einer Sensoreinrichtung der oben beschriebenen Art verbunden ist, bei dem mittels eines Testkörpers auf die Sensoreinrichtung nacheinander Kräfte in verschiedenen Beträgen aus einer Mehrzahl von verschiedenen Richtungen ausgeübt werden und dabei jeweils Muster von individuellen Kraftwerten der einzelnen Kraftsensoren erfasst werden und dass die Verarbeitungseinrichtung durch Eingabe einerseits der Muster der Kraftwerte und andererseits jeweils des Betrages und der Richtung der einwirkenden Kraft trainiert wird, oder bei dem in einem Simulationsverfahren zunächst die Wirkung verschiedener auf die Sensoreinrichtung nacheinander wirkender Kräfte in verschiedenen Beträgen aus einer Mehrzahl von verschiedenen Richtungen auf die Kraftsensoren ermittelt und danach die Verarbeitungseinrichtung durch Eingabe einerseits der Muster der auf die einzelnen Kraftsensoren wirkenden Kraftwerte und andererseits jeweils des Betrages und der Richtung der einwirkenden Kraft trainiert wird.

Mit dem Verfahren können auch bereits in der Trainingsphase Dekalibrierungseffekte durch z.B. Temperatur- und Feuchteschwellung mitberücksichtigt werden.

Die selbstlernende Verarbeitungseinrichtung kann beispielsweise als neuronales Netz ausgebildet sein und durch einen geführten Lernprozess trainiert werden. Dabei werden in einer Vielzahl von einzelnen Trainingsvorgängen jeweils Kräfte in Betrag und Richtung vorgegeben, indem ein Testkörper in einer bestimmten Richtung und mit einer vorbestimmten Kraft auf die Krafteinleitungsschicht der Sensoreinrichtung einwirkt. Gleichzeitig werden die durch die Kraftsensoren erfassten Messwerte dem neuronalen Netz ebenso zugeführt, wie die Richtung und der Betrag der durch den Testkörper einwirkenden Kraft. In dieser Weise wird dann das neuronale Netz in einer Vielzahl von Trainingsvorgängen trainiert.

Die Trainingsdatensätze können, wie beschrieben, auch durch ein Simulationsverfahren gewonnen und dann verwendet werden. Bei derartigen Simulationen können auch verschiedene Formen der Sensoreinrichtung, beispielsweise Freiformflächen oder Standardflächen, über die die Kraftsensoren verteilt sind, berücksichtigt werden.

Es kann auch vorgesehen sein, dass bei solchen Trainingsdatensätzen der Ausfall oder eine Fehlfunktion von einzelnen Kraftsensoren oder Gruppen von Kraftsensoren mit trainiert wird, so dass die Verarbeitungseinrichtung auch beim Ausfall oder einer Fehlfunktion aufgrund der Redundanz der verbleibenden funktionierenden Kraftsensoren zuverlässig funktioniert. Derartige Trainingsdatensätze mit ausgefallenen oder nicht einwandfrei funktionierenden Kraftsensoren können auch dann bei einem Training der Verarbeitungseinrichtung mit verwendet werden, wenn dieses mit tatsächlich wirkenden Kräften und tatsächlich erfassten Messwerten der Kraftsensoren durchgeführt wird. Dadurch wird im Betrieb der Sensoreinrichtung die Auswertung der Messdaten noch robuster und zuverlässiger. Die Sensoreinrichtung funktioniert mit der geeignet trainierten Verarbeitungseinrichtung auch dann, wenn beispielsweise die Messcharakteristiken der einzelnen Kraftsensoren streuen, das heißt unterschiedlich sind. Im Extremfall können als Kraftsensoren beispielsweise auch solche Sensoren eingesetzt werden, welche über nichtlineare Kennlinien verfügen, oder die nur eine begrenzte Anzahl von Zuständen einnehmen und eine begrenzte Anzahl von Messwerten übertragen können, beispielsweise binäre Schalter, die nur zwei verschiedene Messinformationen übertragen können (z.B. Zug/Druck). Auch mit solchen Sensoren kann aufgrund des verwendeten Auswertungsprinzips die Messaufgabe gelöst werden. Wenn derart einfache Kraftsensoren verwendet werden, lassen sich noch wesentlich größere Taxeldichten erreichen.

Wenn Kraftsensoren nach den oben beschriebenen Prinzipien verwendet werden, kann die Sensoreinrichtung unter anderem weitestgehend unabhängig von der Wirkung von Magnetfeldern gemacht werden, was gerade bei einer Verwendung in der Robotik von großem Vorteil sein kann.

Für die Sensoreinrichtung ergibt sich aus ihrer physikalischen Funktionsweise beispielsweise eine geeignete Architektur für die selbstlernende Verarbeitungseinrichtung. Die Sensormatrix liefert ortsaufgelöste Messwerte einer Mehrzahl uniaxialer Kraftsensoren, wobei jeder Sensor ausschließlich einen skalaren Kraftwert entlang einer einzelnen Messachse erfasst. Die eigentliche Information über Betrag und Richtung der einwirkenden Kraft ist dabei nicht in einem einzelnen Sensor enthalten, sondern in dem räumlichen Muster der gleichzeitig erfassten Messwerte über die gesamte Sensormatrix verteilt. Dieses Muster entsteht durch die mechanische Spreizung der Kraft innerhalb der Krafteinleitungsschicht. Daraus folgt, dass die Verarbeitungseinrichtung insbesondere in der Lage sein muss, räumliche Zusammenhänge, lokale Nachbarschaften und charakteristische Muster effizient zu erkennen und auszuwerten.

Für diese Aufgabenstellung ist eine Architektur auf Basis eines Convolutional Neural Network (CNN, faltendes neuronales Netz) besonders geeignet. Diese Netzwerkklasse ist darauf ausgelegt, lokale Strukturen in zweidimensionalen Daten zu erkennen und hierarchisch zu abstrahieren. Die Sensormatrix kann dabei direkt als zweidimensionales Eingabearray interpretiert werden, dessen Einträge den gemessenen Kraftwerten entsprechen. Der Eingabetensor weist somit eine Form von N × M × C auf, wobei N und M die räumlichen Dimensionen der Sensormatrix beschreiben und C die Anzahl der Kanäle darstellt. Im einfachsten Fall ist C gleich eins, da ausschließlich Kraftmesswerte verarbeitet werden. Falls zusätzliche Sensoren, beispielsweise zur Erfassung von Feuchtigkeit, Temperatur oder optischen Eigenschaften, integriert sind, können diese als zusätzliche Kanäle in den Eingabetensor aufgenommen werden.

Die erste Stufe des neuronalen Netzes besteht aus mehreren aufeinanderfolgenden Faltungsschichten (Convolutional Layers), die jeweils mit kleinen Filterkernen arbeiten. Besonders geeignet sind beispielsweise Filtergrößen zwischen 2x2 und 5x5, besonders vorteilhaft erscheint eine Filtergröße von 2x2 in einem oberen Layer und 4x4 in nachfolgenden Layern. Diese bilden die unmittelbare Nachbarschaft eines Sensors ab und entsprechen somit der physikalischen Kopplung innerhalb der elastischen Krafteinleitungsschicht. Es können alternativ auch Filtergrößen von 5 × 5 verwendet werden, um eine größere mechanische Spreizung direkt zu erfassen. In den ersten Schichten des neuronalen Netzes haben die Filterkerne die Aufgabe, sehr einfache, lokale Strukturen zu erkennen. Dazu gehören beispielsweise:
lokale Maxima oder Minima der Druckverteilung,
Gradienten, also Änderungen der Kraftwerte zwischen benachbarten Sensoren,
einfache symmetrische oder asymmetrische Druckflecken.

Diese einfachen Muster entsprechen direkt der physikalischen Realität der Krafteinleitungsschicht, in der sich Kräfte lokal ausbreiten und benachbarte Sensoren beeinflussen. Die Filterkerne lernen dabei während des Trainings selbstständig, welche Gewichtungsmuster innerhalb ihres kleinen Empfangsbereichs (typischerweise 2x2, in tieferen Schichten 4x4 Sensoren) besonders aussagekräftig sind.

Jede Faltungsschicht kann mit einer Normalisierungsschicht kombiniert sein, die die Trainingsstabilität verbessert. Konkret sorgt eine solche Schicht - beispielsweise in Form der Batch Normalization (Batch Normalization, Stapel-Normalisierung) - dafür, dass die Ausgaben einer vorangehenden Schicht innerhalb eines definierten Wertebereichs liegen. Dazu werden die Aktivierungen eines Neuronentyps über eine Trainingsstichprobe hinweg auf einen Mittelwert nahe null und eine Varianz nahe eins normiert. Anschließend werden diese normierten Werte noch mit lernbaren Parametern skaliert und verschoben, sodass das Netzwerk bei Bedarf wieder beliebige Wertebereiche annehmen kann.

Eine Normalisierungsschicht reduziert die Empfindlichkeit gegenüber unterschiedlichen Absolutwerten der Sensorsignale. In der Praxis können die einzelnen Kraftsensoren Streuungen aufweisen, beispielsweise durch Fertigungstoleranzen, Alterung oder Temperaturabhängigkeiten. Ohne Normalisierung würden solche Unterschiede direkt in die nachfolgenden Schichten eingehen und das Training erschweren. Durch die Normalisierung werden diese Effekte weitgehend kompensiert, sodass das Netz stärker auf die relativen Muster der Kraftverteilung fokussiert.

Zudem stabilisiert die Normalisierung den Trainingsprozess. Während des Trainings verändern sich die Gewichte im Netzwerk fortlaufend, wodurch sich auch die Verteilung der Aktivierungen in jeder Schicht ständig verschiebt. Die Normalisierungsschicht wirkt diesem Effekt entgegen, indem sie die Verteilungen kontinuierlich anpasst. Dadurch können höhere Lernraten verwendet werden, und das Training konvergiert schneller und zuverlässiger.

Außerdem verbessert die Normalisierung die numerische Stabilität der Berechnungen. Extreme Aktivierungswerte - sowohl sehr große als auch sehr kleine - können zu Problemen bei der Gradientenberechnung führen. Durch die Begrenzung der Wertebereiche werden solche Effekte reduziert, was insbesondere bei tieferen Netzen von Bedeutung ist.

Schließlich trägt die Normalisierung zur Robustheit gegenüber Störungen bei. Da die Aktivierungen auf eine standardisierte Verteilung gebracht werden, reagiert das Netzwerk weniger empfindlich auf Rauschen in den Eingangsdaten oder auf den Ausfall einzelner Sensoren. Dies ist im vorliegenden Anwendungsfall besonders relevant, da die Patentanmeldung ausdrücklich die Kompensation fehlerhafter oder ausgefallener Sensoren.

Es kann in dem neuronalen Netz vorteilhaft eine nichtlineare Aktivierungsfunktion vorgesehen sein.

Der zentrale Vorteil dieser Nichtlinearität besteht darin, dass das neuronale Netz komplexe, nichtlineare Zusammenhänge modellieren kann. Würde man mehrere lineare Schichten hintereinander schalten, so hätte das Netz keine höhere Ausdrucksfähigkeit als ein einfaches lineares Modell. Erst durch die nichtlinearen Aktivierungsfunktionen wird das Netzwerk in die Lage versetzt, beliebig komplexe, auch stark gekrümmte Abbildungen zwischen Eingabe- und Ausgaberaum zu approximieren.

Im Kontext der Sensoreinrichtung ist dies besonders wichtig, da die gemessenen Kraftverteilungen durch die Krafteinleitungsschicht auf komplexe Weise entstehen. Die mechanische Spreizung hängt von Materialeigenschaften, Geometrie, Anisotropien und möglicherweise auch von nichtlinearen Effekten wie lokalen Verformungen oder Sättigungen ab. Die Aktivierungsfunktionen ermöglichen es dem Netzwerk, diese komplexen physikalischen Zusammenhänge implizit zu erlernen.

Als Aktivierungsfunktion eignet sich insbesondere die Rectified Linear Unit (ReLU, gleichgerichtete lineare Einheit) oder eine ihrer Varianten wie die Leaky Rectified Linear Unit (Leaky ReLU, leicht durchlässige gleichgerichtete lineare Einheit) oder die Gaussian Error Linear Unit (GELU, gaußsche Fehlerlineare Einheit). Diese Funktionen ermöglichen es dem Netzwerk, auch komplexe nichtlineare Zusammenhänge zwischen den Sensormustern und der resultierenden Kraft zu modellieren.

Konkret kann der Tangens hyperbolicus (Tanh) genutzt werden.

Durch die Nutzung mehrschichtiger Netzwerke ist es von Vorteil, wenn der Output einer Schicht selbst wieder beschränkt ist.

Die Architektur ist vorzugsweise in mehrere aufeinanderfolgende Stufen gegliedert, wobei jede Stufe aus zwei oder mehr Faltungsschichten besteht. In einer ersten Stufe werden grundlegende lokale Muster extrahiert, beispielsweise einfache Druckverteilungen. In nachfolgenden Stufen werden diese lokalen Muster zu komplexeren Strukturen kombiniert, etwa zu elliptischen oder allgemeiner asymmetrischen Verteilungen, die charakteristisch für schräg einwirkende Kräfte sind. Mit zunehmender Tiefe des Netzes wächst das rezeptive Feld (receptive field, effektiver Eingangsbereich eines Neurons), sodass schließlich globale Muster über die gesamte Sensormatrix erfasst werden können.

Zur Reduktion der räumlichen Auflösung und zur gleichzeitigen Vergrößerung des rezeptiven Feldes wird zwischen den Stufen ein Downsampling (Downsampling, Unterabtastung) durchgeführt. Dies geschieht vorzugsweise durch Faltungsschichten mit erhöhter Schrittweite (Strided Convolution, Faltung mit Schrittweite größer eins), da diese Methode die Informationsverluste gegenüber Max-Pooling (Max Pooling, Maximum-basiertes Zusammenfassen) reduziert. Auf diese Weise bleibt die feine Struktur der Kraftverteilung besser erhalten, was für eine präzise Rekonstruktion der Kraftrichtung entscheidend ist.

Die Anzahl der Filter pro Schicht kann mit zunehmender Tiefe erhöht werden, beispielsweise von 32 Filtern in der ersten Stufe auf 64 und 128 Filter in tieferen Stufen. Dies ermöglicht eine steigende Abstraktion der Merkmalsrepräsentation. Oft erfolgt auch pro Layer die Betrachtung einer Merkmalsklasse. Die Gesamttiefe des Netzes hängt von der Größe der Sensormatrix ab. Für kleine Matrizen genügen wenige Stufen, während bei hochauflösenden Matrizen zusätzliche Schichten sinnvoll sind. Es können auch beispielsweise für die ersten vier CNN layer jeweils 128 Kanäle benutzt werden. Zur Verbesserung der Trainingsstabilität und zur Vermeidung von Gradientenproblemen können Residualverbindungen (Residual Connections, Restwertverbindungen) eingesetzt werden, wie sie aus Residual Neural Networks (ResNet, Residuales neuronales Netz) bekannt sind.

Nach der letzten Faltungsstufe wird die mehrdimensionale Merkmalsrepräsentation in einen kompakten Vektor überführt. Hierfür eignet sich insbesondere ein Global Average Pooling (Global Average Pooling, globales Mittelwert-Pooling), bei dem für jeden Kanal der Mittelwert über alle räumlichen Positionen gebildet wird. Diese Methode reduziert die Anzahl der Parameter und sorgt gleichzeitig für eine robuste, translationsinvariante Repräsentation der Eingabedaten.

An die Merkmalsextraktion schließt sich ein vollständig verbundenes Netzwerk (Fully Connected Network, vollständig verbundenes neuronales Netz) an, das als Regressionskopf dient. Dieser besteht typischerweise aus mehreren dichten Schichten (Dense Layers, vollvermaschte Schichten) mit abnehmender Neuronenzahl, beginnend beispielsweise mit mehreren tausend Neuronen und von Layer zu layer sinkend, beispielsweise bis auf unter 10 Neuronen, abhängig von der Topologie des Netzes. Die Aktivierungsfunktionen können dabei denen der vorherigen Schichten entsprechen.

Die Ausgabeschicht ist linear ausgeführt und liefert direkt die Komponenten des Kraftvektors, beispielsweise die Ortskoordinaten des Messorts an der Oberfläche und den Kraftvektor in kartesischen Koordinaten als drei Werte für die Raumrichtungen. Diese Darstellung ist besonders vorteilhaft, da sie keine Singularitäten aufweist und direkt mit einer quadratischen Fehlerfunktion (Mean Squared Error, mittlerer quadratischer Fehler) trainiert werden kann. Alternativ ist auch eine Darstellung über Polarkoordinaten möglich, diese ist jedoch aufgrund der nichtlinearen Zusammenhänge schwieriger zu optimieren.

Zur Erhöhung der Robustheit gegenüber Sensorausfällen, Messrauschen und Fertigungstoleranzen können zusätzliche Maßnahmen integriert werden. Dazu zählen insbesondere das gezielte Einbringen von Rauschen in die Eingangsdaten während des Trainings (Noise Injection, Rauschinjektion), das zufällige Deaktivieren einzelner Sensorwerte (Dropout, zufälliges Auslassen von Neuronen oder Eingängen) sowie die Verwendung entsprechend augmentierter Trainingsdatensätze, in denen Sensorausfälle explizit simuliert werden. Dadurch lernt das Netzwerk, auch bei unvollständigen oder gestörten Eingangsdaten stabile Vorhersagen zu treffen.

Für komplexere Geometrien, insbesondere bei stark gekrümmten oder freiformartigen Sensormatrizen, kann die beschriebene Architektur erweitert werden, indem geometrische Informationen zusätzlich berücksichtigt werden. Dies kann entweder durch eine geeignete Projektion der Sensordaten auf eine zweidimensionale Repräsentation oder durch den Einsatz von Graph Neural Networks (GNN, graphbasierte neuronale Netze) erfolgen, bei denen die Sensoren als Knoten eines Graphen modelliert werden.

Insgesamt stellt ein mehrstufiges faltendes neuronales Netz mit moderater Tiefe, kleinen Faltungsfiltern, schrittweiser Unterabtastung, globaler Mittelwertbildung und einem nachgeschalteten Regressionskopf eine besonders geeignete Architektur dar, um aus den ortsaufgelösten Messwerten der Sensormatrix zuverlässig und in Echtzeit den Betrag und die Richtung einer einwirkenden Kraft zu bestimmen. Diese Architektur nutzt die physikalischen Eigenschaften der Krafteinleitungsschicht und der Sensormatrix optimal aus und ermöglicht gleichzeitig eine hohe Robustheit gegenüber Störungen und Variationen im Sensorsystem.

Grundsätzlich können außer den Kraftsensoren auch zusätzlich noch weitere Sensoren zur Messung anderer physikalischer oder chemischer Größen in die Sensoreinrichtung integriert sein und deren Messwerte können beim Training der selbstlernenden Verarbeitungseinrichtung ebenfalls mit einbezogen werden. Derartige weitere Sensoren können beispielsweise die Feuchtigkeit im Bereich der Oberfläche der Krafteinleitungsschicht erfassen, oder eine Temperatur an der Oberfläche der Krafteinleitungsschicht oder eine Helligkeit oder einen anderen Strahlungsparameter. Auch Beschleunigungssensoren können in die Sensoreinrichtung integriert sein, da durch Beschleunigungen die durchgeführten Kraftmessungen beeinflusst oder gestört sein können. Beispielsweise können bei der Handhabung vibrierender Körper Störungen bei der Kraftmessung auftreten. Mittels einer parallelen Beschleunigungsmessung können dann Messwerte der Kraftmessung verworfen oder korrigiert werden. Die Beschleunigungsmessung kann über eine dynamische Kraftmessung auch durch die Kraftsensoren selbst erfolgen.

Die Erfindung bezieht sich zudem auf ein Verfahren zur Messung des Betrages und der Richtung einer auf eine Sensoreinrichtung einwirkenden Kraft, bei dem einer Matrix aus erfassten Messwerten von uniaxialen, räumlich verteilten Kraftsensoren mittels eines trainierten selbstlernenden Systems ein Betrag sowie eine Richtung eines Kraftvektors und auch die Ortskoordinaten der Krafteinleitung zugeordnet werden.

Falls die Sensoreinrichtung außer den Kraftsensoren noch weitere Sensoren für andere physikalische Größen umfasst, so können auch die durch diese weiteren Sensoren erfassten Messwerte durch das selbstlernende System berücksichtigt und ausgewertet werden damit kann Zuverlässigkeit der Auswertung deutlich gesteigert werden.

Die Erfindung umfasst weiter ein Verfahren zur Herstellung einer Sensoreinrichtung zur Erfassung von Betrag und Richtung wenigstens einer Kraft, umfassend:
Herstellung einer Polymerschicht, insbesondere aus einem Parylen, mit einer Matrix von Öffnungen, die die Polymerschicht vollständig durchsetzen, wobei die Polymerschicht insbesondere durch Abscheideverfahren, weiter insbesondere durch ein CVD-Verfahren gebildet wird,
Ausbildung von mehreren, jeweils voneinander beabstandeten Kraftsensoren, die insbesondere jeweils zur Messung einer Kraft in einer einzigen Richtung eingerichtet sind, durch Einbringen, insbesondere Einspritzen, oder Drucken, eines Materials, das entweder piezo-resistiv ist oder eine Dielektrizitätskonstante aufweist, die wenigstens 5 mal so groß ist wie die Dielektrizitätskonstante der Polymerschicht, in die durchgehenden Öffnungen der Polymerschicht,
Aufbringen einer ersten Gruppe von parallelen Leiterbahnen auf der Oberseite der Polymerschicht,
Aufbringen einer zweiten Gruppe von parallelen Leiterbahnen auf der Unterseite der Polymerschicht, derart, dass jeder der Kraftsensoren mit einer Leiterbahn der ersten Gruppe und mit einer Leiterbahn der zweiten Gruppe im elektrischen Kontakt steht und die Leiterbahnen der ersten Gruppe quer, insbesondere senkrecht, zu den Leiterbahnen der zweiten Gruppe verlaufen, sowie
Aufbringen von wenigstens einer Krafteinleitungsschicht mit wenigstens einer Elastomerschicht auf die Polymerschicht.

In manchen Fällen kann auch die dünne CVD-Polymerschicht selbst die drucksensitive Kapazität und damit die Sensormatrix bilden.

Die Polymerschicht kann dabei wenige Mikrometer dick, beispielsweise weniger als 10 Mikrometer dick sein. Das jeweils in die Öffnungen eingebrachte Material kann die Öffnungen vollständig füllen, so dass eine durchgehend glatte Oberfläche der Polymerschicht entsteht, die die Kraftsensormatrix bildet. Die Leiterbahnen können in der Form eines elektrisch leitenden Kunststoffs oder eines Metalls auf die Polymerschicht durch ein Abscheideverfahren aufgebracht werden. Die Polymerschicht kann auch als Ganze in einem generativen Verfahren gemeinsam mit dem piezo-resistiven Material oder einem dielektrischen Material der Kraftsensoren gedruckt werden.

Im Folgenden wird die Erfindung anhand von Ausführungsbeispielen in Figuren einer Zeichnung gezeigt und nachfolgend beschrieben.

Dabei zeigt:
- Figur 1:: schematisch einen Gegenstand, der mit einer Kraft auf die Sensoreinrichtung einwirkt,
- Figur 2:: eine Ansicht einer Gruppe von Kraftsensoren der Sensoreinrichtung, wobei die Krafteinleitungsschicht der Übersichtlichkeit halber weggelassen ist,
- Figur 3:: einen Querschnitt durch eine Ausführungsform der Sensoreinrichtung,
- Figur 4:: eine schematische Ansicht der Informationsverarbeitung der Messwerte von Sensoren der Sensoreinrichtung,
- Figur 5:: ein Ablaufdiagramm des Trainingsverfahrens der selbstlernenden Verarbeitungseinrichtung,
- Figur 6:: eine Skizze einer Hand mit einem Zeigefinger, der Kraftsensoren trägt, sowie
- Figur 7:: eine Polymerschicht mit Öffnungen, in die Kraftsensoren im Zuge eines Herstellungsverfahrens eingebracht werden.

Das Konzept der erfindungsgemäßen Sensoreinrichtung zielt darauf ab, mittels einer Mehrzahl von kostengünstig herstellbaren einzelnen Kraftsensoren aus durch eine Krafteinleitungsschicht flächig verteilten mechanischen Druckkräften eine einwirkende Kraft zu berechnen. Die einzelnen Kraftsensoren bilden hierzu eine vernetzte Matrix, deren Messwerte mittels künstlicher Intelligenz ausgewertet werden können. Die Krafteinleitungsschicht weist in vielen Fällen zumindest eine Elastomerschicht auf. Die Kraftsensoren der Matrix können beliebig, beispielsweise verteilt auf einer Freiformfläche, angeordnet werden. Die Nutzung einer Sensormatrix anstelle von wenigen höherwertigen Sensoren führt zu einer höheren Robustheit gegen Sensordekalibrierung, Ausfall und parasitäre Effekte. Der Ausfall einzelner Sensoren kann bei der Auswertung kompensiert werden.

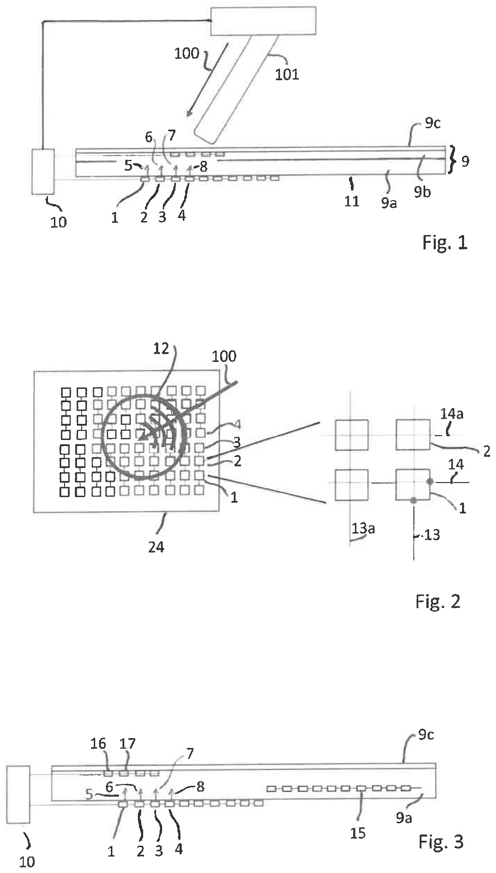

Beispielhaft ist in der Figur 1 zur Verdeutlichung des Messprinzips schematisch eine Sensoreinrichtung mit Kraftsensoren 1, 2, 3, 4 dargestellt, die mit einer Krafteinleitungsschicht 9, 9a, 9b, 9c bedeckt sind. Die Krafteinleitungsschicht kann dabei auf die Kraftsensoren aufgeklebt oder an diese angegossen werden.

Die Krafteinleitungsschicht weist eine oberste Teilschicht 9c, eine unterste Teilschicht 9a und eine mittlere Teilschicht 9b auf. Wenigstens eine der Teilschichten, beispielsweise die unterste Teilschicht 9a, kann aus einem Elastomer bestehen. Es können auch alle Teilschichten aus einem oder verschiedenen Elastomeren bestehen. In einer anderen Ausführungsform kann beispielsweise die oberste Teilschicht 9c aus einem Material bestehen, dass weniger dehnbar ist als die mittlere und die unterste Teilschicht, oder eine der Teilschichten unterhalb der obersten Teilschicht kann aus einem weniger dehnbaren Material bestehen als die darüber liegenden Teilschichten.

In einem weiteren Ausführungsbeispiel kann eine der Teilschichten, beispielsweise die mittlere Schicht 9b, auch ein Gel oder eine oder mehrere mit einem Gel, einer Flüssigkeit oder einem Gas gefüllten Kavitäten enthalten.

In dem in der Figur 1 dargestellten Ausführungsbeispiel ist im Bereich der obersten Teilschicht 9c noch eine weitere Gruppe von Sensoren dargestellt, für deren Ausgestaltung anhand der Figur 3 noch Beispiele gegeben werden. Weiter ist in der Figur 1 sichtbar, dass die Kraftsensoren1, 2, 3, 4 jeweils als uniaxiale Sensoren ausgebildet sind, d. h. Druckkräfte und ggf. Zugkräfte nur entlang jeweils einer Achse erfassen. Die Achsen, entlang denen die Kraftsensoren Kräfte erfassen, sind in der Figur mit 5, 6, 7, 8 bezeichnet. Die Kraftsensoren können beispielsweise so angeordnet sein, dass ihre Achsen 5, 6, 7, 8 jeweils senkrecht zu der Oberfläche der Krafteinleitungsschicht im Bereich des jeweiligen Kraftsensors ausgerichtet sind. Die Achsen der Kraftsensoren können jedoch auch systematisch von dieser Richtung abweichen um beispielsweise Kräfte aus bestimmten Richtungen sensitiver nachweisen zu können als Kräfte mit anderen Ausrichtungen. Zu diesem Zweck können verschiedene Gruppen von Kraftsensoren derart angeordnet sein, dass ihre Achsen bezüglich der Winkel voneinander abweichen. Beispielsweise kann eine Gruppe von Kraftsensoren gegenüber den übrigen Kraftsensoren schräggestellt sein.

In der Figur 1 ist oberhalb der Krafteinleitungsschicht 9, 9a, 9b, 9c ein Testkörper 101 dargestellt, mit dem eine selbstlernende Verarbeitungseinrichtung 10, die mit den Kraftsensoren, 1, 2, 3, 4 verbunden ist, trainiert werden kann. Zu diesem Zweck wird mittels des Testkörpers 101 nacheinander mit verschieden ausgerichteten Kräften unterschiedlicher Größe auf die Krafteinleitungsschicht eine Kraft 100 ausgeübt, die bezüglich Betrag und Richtung registriert wird. Betrag und Richtung der Kraft wird jeweils zum Training an die Verarbeitungseinrichtung 10 übermittelt wobei gleichzeitig die Messwerte der Kraftsensoren 1,2, 3,4 als Eingangsgrößen an die Verarbeitungseinrichtung 10 übermittelt werden. Der Kraftvektor der einwirkenden Kraft ist in der Figur 1 mit 100 bezeichnet.

Die Figur 2 zeigt in einer Draufsicht eine Matrix von Kraftsensoren 1, 2, 3, 4, die auf einer flexiblen Matte 24 angeordnet sind. Diese kann beispielsweise aus einem Elastomer bestehen und die Kraftsensoren können in einem 3D-Druckverfahren auf die Matte 24 aufgedruckt sein. Die Kraftsensoren können dabei aus einem Polymer durch ein generatives Verfahren hergestellt sein oder aus einer Kombination mehrerer Materialien, beispielsweise einem Polymer und einem Metall oder aus einem Polymer und einem elektrisch leitenden oder piezo-sensitiven Material. Auch die elektrischen Verbindungsleitungen zwischen den Kraftsensoren können mitgedruckt werden oder sie können zu Beginn des Druckprozesses bereits auf der Matte vorhanden sein.

Es kann auch die Matte, die die Kraftsensoren trägt, aus den elektrischen Zuleitungen gebildet sein. Dabei kann dann in einer Ausführungsform die gesamte Matte mit den Kraftsensoren in einem generativen (3d-) Herstellungsverfahren geschaffen werden.

Die Figur 2 zeigt symbolisch die Wirkung einer Kraft 100, die auf die Sensoreinrichtung mittels einer nicht dargestellten Krafteinleitungsschicht einwirkt. Die Kraft/der Druck wird über die Krafteinleitungsschicht auf eine Mehrzahl von Kraftsensoren verteilt, wobei sich in Abhängigkeit von der Richtung, in der die Kraft wirkt, ein charakteristisches Muster ausbildet. Dieses ist in der Figur 2 durch einen Kreis 12 dargestellt, der die besonders beeinflussten Kraftsensoren bezeichnet. Zudem ist durch die eingezeichneten Teilkreise ein besonders stark mit Kräften belasteter Bereich der Kraftsensoren bezeichnet. Ein derartiges Belastungsmuster lässt nach einem entsprechenden Training der Verarbeitungseinrichtung 10 Rückschlüsse auf die Richtung der Kraft 100 zu.

Im rechten Teil der Figur 2 sind vergrößert vier Kraftsensoren 1, 2 mit den jeweiligen Zuleitungen 13, 14 dargestellt, an die sie angeschlossen sind. Durch die gitterartige Gestaltung der Zuleitungen kann jeder Kraftsensor einzeln adressiert und ausgelesen werden.

Die Figur 3 zeigt eine Sensoreinrichtung mit einer Krafteinleitungsschicht 9a, 9c, wobei unterhalb der Teilschicht 9a die Kraftsensoren 1, 2, 3, 4 angeordnet sind. Unterhalb der oberen Teilschicht 9c sind die Sensoren 16, 17 dargestellt, die beispielsweise als Feuchtesensoren oder auch als Lichtsensoren ausgebildet sein können. In einigen Fällen können diese Sensoren auch in den Grundkörper unterhalb der Kraftsensoren oder in dieselbe Schicht wie diese integriert werden.

Wenn diese Sensoren als lichtempfindliche Sensoren ausgestaltet sind und die obere Teilschicht 9c wenigstens teilweise für Licht durchlässig ist, kann mittels der Sensoren durch die Erfassung einer Abschattung ermittelt werden, ob gerade ein Körper im Bereich der Sensoren die Krafteinleitungsschicht berührt.

Auf der rechten Seite der Figur 3 ist eine Matrix 15 von Kraftsensoren dargestellt, die vollständig in die Kraftleitungsschicht eingegossen sind. Insbesondere können die Kraftsensoren in ein elastisches Material oder eine elastische Teilschicht der Krafteinleitungsschicht eingegossen sein oder sich auf der untersten starren bzw. mechanisch steifen, Freiformfläche befinden.

In der Figur 3 sind, ebenso wie in der Figur 1, symbolisch Verbindungsleitungen der Kraftsensoren mit der Verarbeitungseinrichtung 10 dargestellt, die die Messwerte der Kraftsensoren und gegebenenfalls auch Messwerte weiterer Sensoren verarbeitet.

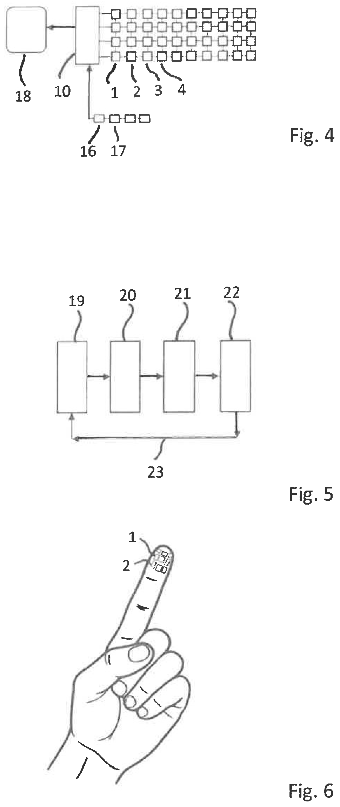

Die Figur 4 zeigt schematisch in einer Draufsicht eine Matrix von Kraftsensoren 1,2, 3, 4, die mit einer Verarbeitungseinrichtung 10 mittels Verbindungsleitungen verbunden sind. Zudem sind weitere Sensoren 16,17 mit der Verarbeitungseinrichtung verbunden. Die Verarbeitungseinrichtung ist in vielen Fällen als selbstlernende Verarbeitungseinrichtung ausgebildet, beispielsweise als neuronales Netz, und gibt die ermittelten Werte der wirkenden Kraft mittels einer Ausgabeeinrichtung 18, beispielsweise einer Anzeige, aus oder fusioniert zur Datenreduktion bestimmte Messdaten.

In der Figur 5 ist ein Ablaufdiagramm für einen Trainingsprozess zum Training der selbstlernenden Verarbeitungseinrichtung 10 dargestellt.

In einem ersten Schritt 19 wird die mittels eines Testkörpers 101 eingebrachte Kraft bezüglich ihres Betrages und der Richtung vorgegeben oder ermittelt und diese Werte werden an die Verarbeitungseinrichtung übermittelt.

In einem zweiten Schritt 20 werden die uniaxialen Kraftmesswerte der Kraftsensoren erfasst (oder simuliert) und an die Verarbeitungseinrichtung übermittelt. Diese Messwerte können ausschließlich in Beträgen/Skalaren bestehen, da jeder einzelne Kraftsensor lediglich einen Kraftbetrag und keine Richtung ermittelt. In einem dritten Schritt 21 werden sowohl die vorgegebenen Werte der einwirkenden Kraft als auch die Messwerte der Kraftsensoren dem neuronalen Netz der selbst lernenden Verarbeitungseinrichtung 10 zugeleitet sodass ein Anpassungsschritt oder Lernschritt des neuronalen Netzes vorgenommen werden kann. Im folgenden Schritt 22 wird dann die einwirkende Kraft in Bezug auf den Betrag und oder die Richtung geändert und das Verfahren wird durch einen Rücksprung 23 auf den ersten Schritt 19 in einer Schleife wiederholt.

Nach einer ausreichenden Zahl derartiger Trainingsschleifen ist die Verarbeitungseinrichtung 10 ausreichend trainiert und dazu bereit, im Messbetrieb den Messwerten der Kraftsensoren jeweils eine einwirkende Kraft in Bezug auf deren Betrag und Richtung zuzuordnen.

Im Herstellungsprozess einer Sensormatrix von Kraftsensoren kann die benötigte Größe und Form der Matrix frei bestimmt und skaliert werden. Zusätzlich kann im Betrieb auch eine Teilgruppe von Kraftsensoren jeweils für eine Messung ausgewählt und sensibilisiert werden oder es kann nur eine Teilgruppe von Sensoren für eine Krafterfassung ausgelesen werden. Hierzu kann zwischen der Verarbeitungseinrichtung 10 und der Sensormatrix eine Ausleseelektronik vorgesehen sein, die die Messwerte der Kraftsensoren ausliest und codiert. Diese Ausleseelektronik kann auch dazu eingerichtet sein, bestimmte Bereiche der Sensormatrix für eine Messung auszuwählen. Die Ausleseelektronik kann beispielsweise als elektronischer Schaltkreis in Form eines ASIC ausgebildet sein.

Die Figur 6 zeigt beispielhaft einige Kraftsensoren, die durch eine entsprechende Formgebung auf der Oberfläche eines Fingers, insbesondere eines künstlichen Fingers, angeordnet werden können. Die Zuleitungen und die Auswerteelektronik können geschützt durch das Material des Fingerkörpers, beispielsweise in dessen Innerem oder auf seiner Rückseite angeordnet sein.

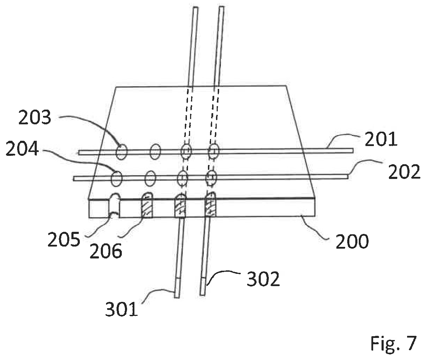

In der Figur 7 ist eine Polymerschicht 200 gezeigt, deren Größen- und Dickenverhältnisse aus Gründen der Übersichtlichkeit verzerrt sind. Die Polymerschicht kann beispielsweise eine Dicke von weniger als 10 Mikrometern aufweisen. Es sind in der Polymerschicht 200 durchgehende Öffnungen 203, 204, 205 dargestellt sowie eine Öffnung, die bereits durch ein piezoresistives oder hochdielektrisches und gleichzeitig nachgiebiges Material 206 gefüllt ist, um einen Kraftsensor zu bilden. In einem Spezialfall kann auch das CVD-Polymer selbst als druckveränderliche Kapazität verwendet werden.

Die Polymerschicht 200 kann beispielsweise aus einem Parylen bestehen und durch einen Abscheidungsprozess gebildet sein.

Die Öffnungen bilden eine regelmäßige Matrix und sind auf der Oberseite der Polymerschicht jeweils durch Leiterbahnen 201, 202 kontaktiert sowie auf der Unterseite der Polymerschicht durch Leiterbahnen 301, 302.

Die Leiterbahnen sind mit einer Auswerteeinrichtung verbunden und durch die Änderung von Signalen in jeweils einer Leiterbahn auf der Unterseite und einer Leiterbahn auf der Oberseite der Polymerschicht kann ein elektrisches Signal, dessen Stärke die Größe einer einwirkenden Kraft repräsentiert, einem Kraftsensor-Muster zugeordnet werden. Dabei stört das teilweise Übersprechen zwischen den einzelnen Sensoren nicht, da die Information über die Kraftverteilung durch die kollektive Reaktion des Sensornetzwerks auf eine Krafteinwirkung repräsentiert ist und die selbstlernende Einrichtung auch entsprechend trainiert worden ist. Die einzelnen Kraftsensoren können beispielweise mit einer Bit-Tiefe von 4 oder 8 Bit ausgelesen werden.

## Patentansprüche

1. Sensoreinrichtung zur Erfassung von Betrag und Richtung wenigstens einer Kraft (100), umfassend:
mehrere Kraftsensoren (1, 2, 3, 4), die jeweils zur Messung einer Kraft in einer einzigen Richtung (5, 6, 7, 8) eingerichtet, voneinander beabstandet und von wenigstens einer Krafteinleitungsschicht (9, 9a, 9b, 9c) mit wenigstens einer homogenen Elastomerschicht bedeckt sowie mit einer gemeinsamen Verarbeitungseinrichtung verbunden sind, wobei die Krafteinleitungsschicht eine erhebungsfreie Oberfläche und insbesondere eine konstante Dicke aufweist.

2. Sensoreinrichtung nach Anspruch 1, **dadurch gekennzeichnet, dass** die Kraftsensoren (1, 2, 3, 4) auf einer ebenen, ein- oder mehrdimensional gekrümmten oder als Freiform gestalteten Fläche verteilt nebeneinander angeordnet sind.

3. Sensoreinrichtung nach Anspruch 1 oder 2, **dadurch gekennzeichnet, dass** die Kraftsensoren (1, 2, 3, 4) in die Krafteinleitungsschicht (9, 9a, 9b, 9c) eingebettet oder unter dieser auf einer starren Freiformoberfläche angeordnet sind.

4. Sensoreinrichtung nach Anspruch 1, 2 oder 3, **dadurch gekennzeichnet, dass** die Krafteinleitungsschicht (9, 9a, 9b, 9c) als homogene Schicht ausgebildet oder aus mehreren verschiedenen und übereinander angeordneten Teilschichten (9a, 9b, 9c) gebildet ist, wobei die verschiedenen Teilschichten wenigstens teilweise unterschiedliche Eigenschaften, insbesondere unterschiedliche mechanische Eigenschaften, aufweisen.

5. Sensoreinrichtung nach Anspruch 4, **dadurch gekennzeichnet, dass** die Krafteinleitungsschicht (9, 9a, 9b, 9c) verschiedene Teilschichten (9a, 9b, 9c) aus Materialien mit unterschiedlichen Elastizitätskonstanten aufweist, wobei die Krafteinleitungsschicht insbesondere in wenigstens einer Teilschicht mechanisch anisotrope Eigenschaften aufweist.

6. Sensoreinrichtung nach einem der Ansprüche 1 bis 5, **dadurch gekennzeichnet, dass** wenigstens eine Teilschicht (9a, 9b, 9c) der Krafteinleitungsschicht (9, 9a, 9b, 9c), insbesondere die gesamte Krafteinleitungsschicht, aus einem Elastomer besteht.

7. Sensoreinrichtung nach einem der Ansprüche 1 bis 6, **dadurch gekennzeichnet, dass** zumindest eine Gruppe der Kraftsensoren (1, 2, 3, 4), insbesondere alle Kraftsensoren, als jeweils uniaxiale Sensoren und/oder als MEMS-Sensoren aus einem oder mehreren Polymerwerkstoffen und/oder als durch ein generatives Herstellungsverfahren aus einem oder mehreren Polymerwerkstoffen hergestellte Sensoren ausgebildet sind.

8. System mit einer Sensoreinrichtung gemäß einem der Ansprüche 1 bis 7 sowie einer Verarbeitungseinrichtung (10), die als selbstlernende Verarbeitungseinrichtung ausgebildet ist und erfassten Kraftwerten einer Mehrzahl der Kraftsensoren (1, 2, 3, 4) insgesamt einen Kraftvektor (100) in Betrag und Richtung und auch die Ortskoordinaten der Krafteinleitung- zuordnet.

9. Verfahren zum Training einer selbstlernenden Verarbeitungseinrichtung (10), die mit einer Sensoreinrichtung nach einem der Ansprüche 1 bis 7 verbunden ist, bei dem mittels eines Testkörpers (101) auf die Sensoreinrichtung nacheinander Kräfte (100) in verschiedenen Beträgen aus einer Mehrzahl von verschiedenen Richtungen ausgeübt werden und dabei jeweils Muster von individuellen Kraftwerten der einzelnen Kraftsensoren (1, 2, 3, 4) erfasst werden und dass die Verarbeitungseinrichtung durch Eingabe einerseits der Muster der Kraftwerte und andererseits jeweils des Betrages und der Richtung der einwirkenden Kraft trainiert wird, oder bei dem in einem Simulationsverfahren zunächst die Wirkung verschiedener auf die Sensoreinrichtung nacheinander wirkender Kräfte (100) in verschiedenen Beträgen aus einer Mehrzahl von verschiedenen Richtungen auf die Kraftsensoren ermittelt und danach die Verarbeitungseinrichtung durch Eingabe einerseits der Muster der auf die einzelnen Kraftsensoren wirkenden Kraftwerte und andererseits jeweils des Betrages und der Richtung der einwirkenden Kraft trainiert wird.

10. Verfahren zur Messung des Betrages und der Richtung einer auf eine Sensoreinrichtung einwirkenden Kraft (100), bei dem einer Matrix aus erfassten Messwerten von uniaxialen, räumlich verteilten Kraftsensoren (1, 2, 3, 4) mittels einer trainierten selbstlernenden Verarbeitungseinrichtung (10) ein Betrag sowie eine Richtung eines Kraftvektors und auch die Ortskoordinaten der Krafteinleitung zugeordnet werden.

11. Verfahren zur Herstellung einer Sensoreinrichtung zur Erfassung von Betrag und Richtung wenigstens einer Kraft (100), umfassend:
Herstellung einer Polymerschicht (200), insbesondere aus einem Parylen, mit einer Matrix von Öffnungen (203, 204, 205), die die Polymerschicht vollständig durchsetzen, wobei die Polymerschicht insbesondere durch Abscheideverfahren, weiter insbesondere durch ein CVD-Verfahren gebildet wird, Ausbildung von mehreren, jeweils voneinander beabstandeten Kraftsensoren (1, 2, 3, 4), die insbesondere jeweils zur Messung einer Kraft in einer einzigen Richtung (5, 6, 7, 8) eingerichtet sind, durch Einbringen, insbesondere Einspritzen, oder Drucken, eines Materials (206), das entweder piezor-esistiv ist oder eine Dielektrizitätskonstante aufweist, die wenigstens 5 mal so groß ist wie die Dielektrizitätskonstante der Polymerschicht, in die durchgehenden Öffnungen der Polymerschicht,
Aufbringen einer ersten Gruppe von parallelen Leiterbahnen (201, 202) auf der Oberseite der Polymerschicht,
Aufbringen einer zweiten Gruppe von parallelen Leiterbahnen (301, 302) auf der Unterseite der Polymerschicht, derart, dass jeder der Kraftsensoren mit einer Leiterbahn der ersten Gruppe und mit einer Leiterbahn der zweiten Gruppe im elektrischen Kontakt steht und die Leiterbahnen der ersten Gruppe quer, insbesondere senkrecht, zu den Leiterbahnen der zweiten Gruppe verlaufen, sowie
Aufbringen von wenigstens einer Krafteinleitungsschicht (9, 9a, 9b, 9c) mit wenigstens einer Elastomerschicht auf die Polymerschicht.
